(19) Europäisches Patentamt / European Patent Office / Office européen des brevets

(11) **EP 2 670 149 A2**

(12) **EUROPEAN PATENT APPLICATION**

(43) Date of publication:
**04.12.2013 Bulletin 2013/49**

(51) Int Cl.:
**H04N 13/04** *(2006.01)*

(21) Application number: **13169637.9**

(22) Date of filing: **29.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.05.2012 KR 20120057378**

(71) Applicant: **Samsung Electronics Co., Ltd
Gyeonggi-do 443-742 (KR)**

(72) Inventors:
• **Lee, Chi-Hoon
  443-742 Gyeonggi-do (KR)**
• **Kang, Ji-Young
  443-742 Gyeonggi-do (KR)**
• **Park, Mi-Jung
  443-742 Gyeonggi-do (KR)**
• **Oh, Sae-Gee
  443-742 Gyeonggi-do (KR)**

(74) Representative: **Nederlandsch Octrooibureau
P.O. Box 29720
2502 LS The Hague (NL)**

(54) **Apparatus and method for providing image in terminal**

(57) An apparatus and a method for providing an image to allow a user to feel the perspective of images on a terminal depending on his or her gaze position and distance are provided. The apparatus includes a camera module for capturing a face image and a controller for displaying an image by rearranging a plurality of screen layers constituting the image depending on a change in positions of two eye images extracted from the face image captured by the camera module.

FIG.7

EP 2 670 149 A2

**Description**

BACKGROUND OF THE INVENTION

*Field of the Invention:*

The present invention relates to an apparatus and method for adjusting provision of images in a terminal. More particularly, the present invention relates to an image providing apparatus and method for allowing a user to feel the perspective of images on a terminal depending on his or her gaze position and distance.

2. Description of the Related Art:

In recent years, 3-Dimensional (3D) image processing technologies have been used in various fields including education, training, health, movies, computer games, and the like. 3D image processing technologies are being used in such a diverse set of fields because 3D images may express better presence feeling, real feeling, and natural feeling, relative to 2-Dimensional (2D) images.

Many studies have been conducted to implement 3D image display devices. For implementation of the 3D image display devices, such devices require various technologies such as input technology, processing technology, transmission technology, display technology, software technology, and the like. In particular, studies on display technology, digital image processing technology, computer graphics technology, and human visual system are essential.

3D image display devices according to the related art may be classified into stereoscopic display devices and autostereoscopic display devices. The stereoscopic display devices may be subclassified into color separation-based display devices that allow users to view images with colored glasses, using different wavelengths of light; polarized glass-based display devices that use different vibration directions of light; and liquid crystal shutter-based display devices that allow users to view left-eye images and right-eye images separately in a time-division manner.

The autostereoscopic 3D display devices provide 3D stereoscopic images to users in a way of separately providing left-eye images and right-eye images so that the users may view the 3D stereoscopic images without wearing 3D glasses. A 3D stereoscopic image providing technique according to the related art may provide vivid stereoscopic images to users by recognizing a change in view point upon detection of a change in position of user's head or face image, and rotating or rearranging the images displayed on a display depending on the user's gaze direction.

However, the rotating of displayed images simply depending on the user's gaze direction may not ensure the 3D effects that the user may feel the perspective of images as if he or she watches real-world scenes, as a far view and a near view differently respond to the user's gaze position.

Therefore, a need exists for an image providing apparatus and method for allowing a user to feel the perspective of images on a terminal depending on his or her gaze position and distance.

The above information is presented as background information only to assist with an understanding of the present disclosure. No determination has been made, and no assertion is made, as to whether any of the above might be applicable as prior art with regard to the present invention.

**SUMMARY OF THE INVENTION**

Aspects of the present invention are to address at least the above-mentioned problems and/or disadvantages and to provide at least the advantages described below. Accordingly, an aspect of the present invention is to provide an image providing apparatus and method for allowing a user to feel the perspective of images on a terminal depending on his or her gaze position and distance.

In accordance with an aspect of the present invention, an apparatus for providing an image in a terminal is provided. The apparatus includes a camera module for capturing a face image; and a controller for displaying an image by rearranging a plurality of screen layers constituting the image depending on a change in  positions of two eye images extracted from the face image captured by the camera module.

In accordance with another aspect of the present invention, a method for providing an image in a terminal is provided. The method includes extracting two eye images from a face image captured by a camera module; and displaying an image by rearranging a plurality of screen layers constituting the image depending on a change in positions of the extracted two eye images.

Other aspects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 shows a structure of a terminal according to an exemplary embodiment of the present invention.

FIGs. 2A and 2B show a process of providing images in a terminal according to an exemplary embodiment of the present invention.

FIGs. 3A and 3B show components for mapping eye images in a 3-Dimensional (3D) space in a process such as, for example, the process of FIGs. 2A and 2B, according to an exemplary embodiment of the present invention.

FIG. 4 shows a 3D space in which eye images are mapped in a process such as, for example, the process of FIGs. 2A and 2B, according to an exemplary embodiment of the present invention.

FIGs. 5A and 5B show positions of eye images which are shifted left/right and up/down in a 3D space, for example the 3D space of FIG. 4, according to an exemplary embodiment of the present invention.

FIG. 6 shows a plurality of screen layers in a process such as, for example, the process of FIGs. 2A and 2B, according to an exemplary embodiment of the present invention.

FIG. 7 shows an operation in which a plurality of screen layers constituting an image are rearranged in their associated reference positions in a process such as, for example, the process of FIGs. 2A and 2B, according to an exemplary embodiment of the present invention.

FIG. 8 shows an operation of displaying a perspective image by changing positions of a plurality of screen layers depending on a change in distance between a user's two eye images in a process such as, for example, the process of FIGs. 2A and 2B, according to an exemplary embodiment of the present invention.

FIG. 9 shows an image which is displayed on a terminal depending on shifts of a plurality of screen layers constituting the image, according to an exemplary embodiment of the present invention.

Throughout the drawings, it should be noted that like reference numbers are used to depict the same or similar elements, features, and structures.

## DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be  apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention will now be described in detail with reference to accompanying drawings. Throughout the drawings, the same drawing reference numerals will be understood to refer to the same elements, features and structures.

Terminals, to which exemplary embodiments of the present invention are applicable, may include both mobile terminals and fixed terminals. The mobile terminals, which are mobile electronic devices that a user may easily carry, may include video phones, mobile phones, smart phones, International Mobile Telecommunication 2000 (IMT-2000) terminals, Wideband Code Division Multiple Access (WCDMA) terminals, Universal Mobile Telecommunication Service (UMTS) terminals, Personal Digital Assistants (PDAs), Portable Multimedia Players (PMPs), Digital Multimedia Broadcasting (DMB) terminals, Electronic €-Book, portable computers (e.g., notebook computers, tablet computers, and the like), digital cameras, and the like. The fixed terminals may include desktop computers, Personal Computers (PCs), and the like.

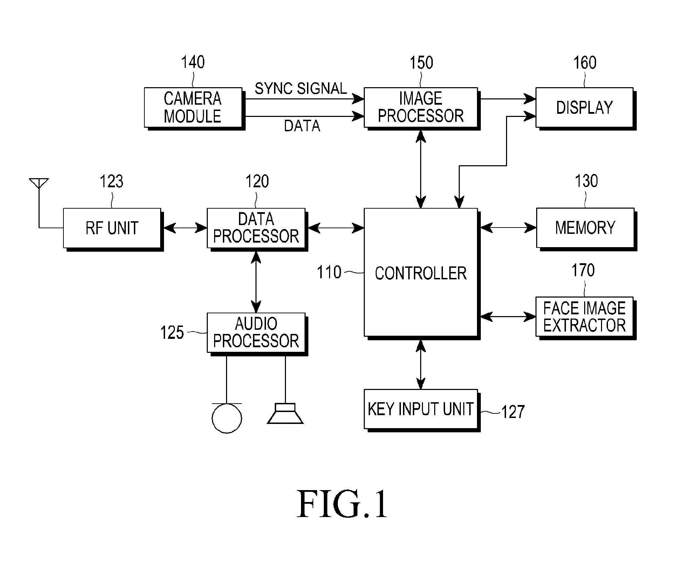

FIG. 1 shows a structure of a terminal according to an exemplary embodiment of the present invention.

Referring to FIG. 1, the terminal includes a controller 110, a data processor 120, a Radio Frequency (RF) unit 123, an audio processor 125, a key input unit 127, a memory 130, a camera module 140, an image processor 150, a display 160, and a face image extractor 170. The RF unit 123 is responsible for wireless communication of the terminal. The RF unit 123 includes an RF transmitter for up-converting a frequency of transmission signals and for amplifying the up-converted transmission signals, and an RF receiver for low-noise-amplifying received signals and for down-converting a frequency of the amplified received signals. A data processor 120 includes a transmitter for coding and modulating the transmission signals and a receiver for demodulating and decoding the received signals. In other words, the data processor 120 may include a modulator/demodulator (e.g., a modem) and a coder/decoder (e.g., a codec). The codec includes a data codec for processing data signals such as packet data, and an audio codec for processing audio signals such as voice. An audio processor 125 plays received audio signals output from the audio codec in the data processor 120, and transfers transmission audio signals picked up by a microphone to the audio codec in the data processor 120.

A key input unit 127 includes alphanumeric keys for inputting alphanumeric information and function keys for setting various functions of the terminal. As an example, the key input unit 127 may be a touch screen.

A memory 130 may include a program memory and a data memory. The program memory may store programs for controlling the overall operation of the terminal, and programs for displaying perspective images by rearranging a plurality of screen layers depending on the change in positions of user's eye images according to an exemplary embodiment of the present invention. The data memory may temporarily store the data generated during execution of the programs.

In accordance with an exemplary embodiment of the present invention, the memory 130 stores a plurality of images, and each image includes a plurality of screen layers, depths of which are differently set in order in advance. All or some of the plurality of screen layers may be configured to be transparent, such that when the plurality of screen layers overlap with each other, the screen layers may display a single image.

A controller 110 controls the overall operation of the terminal.

In accordance with an exemplary embodiment of the present invention, the controller 110 may display a perspective image by rearranging a plurality of screen layers constituting one image depending on the change in positions of eye images extracted from a face image captured by a camera module 140.

The controller 110 may extract two eye images from a face image captured by the camera module 140, calculate and measure a distance between the extracted two eye images, and set the measured distance between two eye images as a reference distance $E_0$ between two eye images. According to an exemplary embodiment of the present invention, the controller 110 may calculate the distance between two eye images as corresponding to a distance between the center of one eye image and the center of the other eye image.

The controller 110 extracts, from the memory 130, a predetermined distance Do between a user and a screen of a display 160, which corresponds to the reference distance $E_0$ between two eye images.

Generally, the user starts viewing images at a proper distance corresponding to a distance at which the user can watch the screen of the display 160. In the image providing mode, the controller 110 may set a distance between positions (e.g., a distance between two eye images extracted through image capturing) of two initial eye images captured by the camera module 140, as a reference distance $E_0$ between two eye images. After setting the reference distance $E_0$ between two eye images through the initial image capturing, the controller 110 may extract its associated predetermined distance Do from the memory 130, estimating that the user is at a proper distance at which the user can watch the screen of the display 160.

According to exemplary embodiments of the present invention, in the image providing mode, the controller 110 may provide a predetermined reference distance $E_0$ between two eye images and its associated distance Do between a screen and a user, and the center of the reference distance $E_0$ between two eye images corresponds to the center of the screen of the display 160.

After setting the reference distance $E_0$ between two eye images, the controller 110 may extract two eye images from a face image captured by the camera module 140, and calculate and measure a distance $E_n$ between the extracted two eye images. The controller 110 may compare the measured distance $E_n$ between two eye images with the reference distance $E_0$ between two eye images, and extract components for mapping the two eye images, the distance $E_n$ between which is measured, in a 3D space, if the measured distance $E_n$ is different from the reference distance $E_0$.

As the components for mapping the two eye images in the 3D space, the controller 110 may extract a distance $D_n$ between a screen and a user, which corresponds to the measured distance $E_n$ between two eye images, and extract a left/right shift distance $W_n$ and/or an up/down shift distance $H_n$ from the center $a_0$ of the reference distance $E_0$ between two eye images to the center $a_n$ of the measured distance $E_n$ between two eye images.

The controller 110 may calculate a difference between the measured distance $E_n$ between two eye images and the reference distance $E_0$ between two eye images, and extract a distance $D_n$ between a screen and a user by applying the difference to the distance Do between a screen and a user.

Otherwise, the controller 110 may calculate a difference between the measured distance $E_n$ between two eye images and the reference distance $E_0$ between two eye images, and extract a distance value corresponding to the difference from the memory 130, as the distance $D_n$ between a screen and a user.

After comparing the measured distance $E_n$ between two eye images with the reference distance $E_0$ between two eye images, the controller 110 may display an image on the screen of the display 160 by rearranging a plurality of screen layers constituting the image in their predetermined reference positions, if the measured distance $E_n$ is equal to the reference distance $E_0$.

Based on the components for mapping the two eye images in the 3D space, the controller 110 maps the two eye images, the distance $E_n$ between which is measured, in the 3D space, and sets, as a center line $V_m$, a line connecting a virtual vanishing point V, which is set in a back of the screen in the 3D space, to the center $a_0$ of the reference distance $E_0$ between two eye images.

The controller 110 may measure a left/right shift distance and/or an up/down shift distance for each of the plurality of screen layers depending on the positions of eye images shifting with respect to the center line $V_m$ in accordance with Equation (1) below.

$$Left/RightShiftDistanceForLayerN = \frac{(DepthV - DepthN)}{(DepthV - D_n)} * W_n$$

$$Up/DownShiftDistanceForLayerN = \frac{(DepthV - DepthN)}{(DepthV - D_n)} * H_n \qquad \cdots \cdots$$

$$(1)$$

where n > 1, Depth V corresponds to a predetermined distance between the virtual vanishing point V and a screen of a display, Depth N corresponds to a predetermined distance between an N-th screen layer among the plurality of screen layers and the screen of the display; $D_n$ corresponds to a distance between the screen of the display and the user, which corresponds to the measured distance $E_n$ between two eye images, Wn corresponds to a left/right shift distance from the center $a_0$ of the reference distance $E_0$ between two eye images to the center $a_n$ of the measured distance $E_n$ between two eye images, and Hn corresponds to an up/down shift distance from the center $a_0$ of the reference distance $E_0$ between two eye images to the center $a_n$ of the measured distance $E_n$ between two eye images.

The controller 110 may display a perspective image by rearranging the plurality of screen layers, the left/right shift distance and the up/down shift distance of which are measured, depending on the positions of eye images shifting with respect to the center line $V_m$.

A face image extractor 170 may extract a user's face image from an object captured by the camera module 140, extract eye images from the extracted face image, and provide the extracted images to the controller 110.

The camera module 140 includes a camera sensor for capturing image data and for converting the captured optical image signal into an electrical image signal, and a signal processor for converting analog image signals captured by the camera sensor into digital image data. The camera sensor is assumed to be a Charge Coupled Device (CCD) sensor or a Complementary Metal-Oxide Semiconductor (CMOS) sensor, and the signal processor may be implemented with a Digital Signal Processor (DSP). The camera sensor and the signal processor may be implemented integrally or separately.

When providing images on the screen of the display 160, the camera module 140 may operate automatically or manually.

An image processor 150 performs Image Signal Processing (ISP) to display image signals output from the camera module 140 on the display 160. The ISP may include gamma correction, interpolation, spatial variation, image effecting, image scaling, Auto White Balance (AWB), Auto Exposure (AE), Auto Focus (AF), and the like. The image processor 150 processes the image signals output from the camera module 140 on a frame basis, and outputs the frame image data to well-match with the characteristics and size of the display 160. The image processor 150 includes a video codec and may compress frame image data displayed on the display 160 by predetermined coding, and decompress compressed frame image data into its original frame image data. The video codec may be any one of a Joint Photographic Experts Group (JPEG) codec, a Moving Picture Experts Group-4 (MPEG4) codec, a Wavelet codec, and the like. The image processor 150 is assumed to have an On Screen Display (OSD) feature, and may output OSD data depending on the size of the displayed screen, under control of the controller 110.

The display 160 displays, on a screen, image signals output from the image processor 150 and user data output from the controller 110. The display 160 may include a Liquid Crystal Display (LCD), and the like. In the case in which the display includes an LCD, the display 160 may include an LCD controller, a memory for storing image data, and an LCD panel. When the LCD is implemented to support a touch screen feature, the display 160 may serve as an input unit, and in this case, the same keys as those on the key input unit 127 may be displayed on the display 160.

In accordance with an exemplary embodiment of the present invention, the display 160 may display perspective images depending on the change in positions of user's eye images captured by the camera module 140.

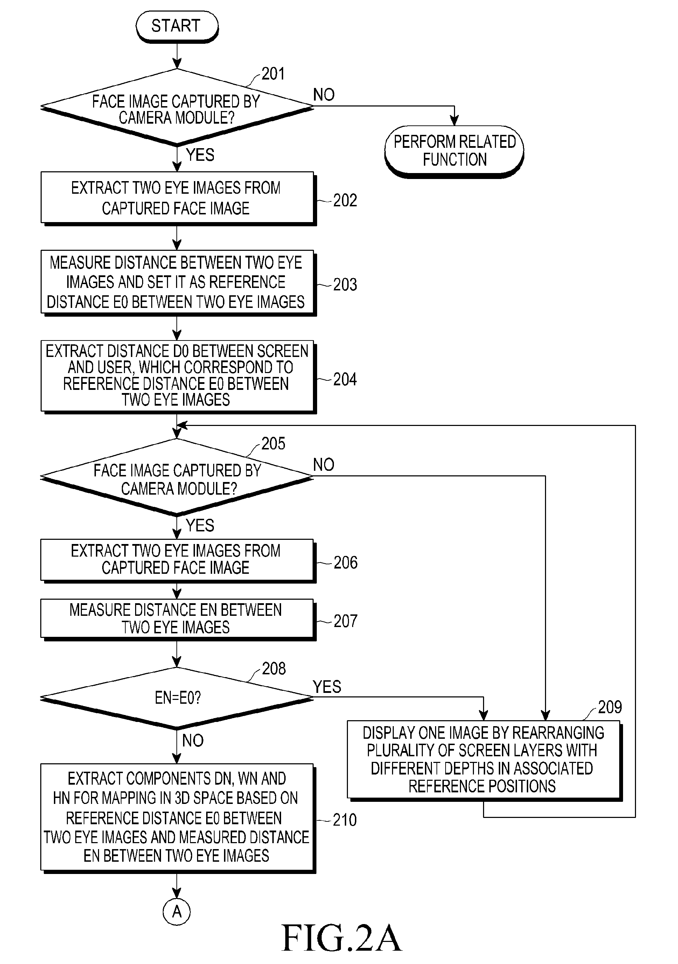

An operation of displaying perspective images depending on the change in positions of user's eye images in the above-described terminal will be described in detail with reference to FIGs. 2A to 9.

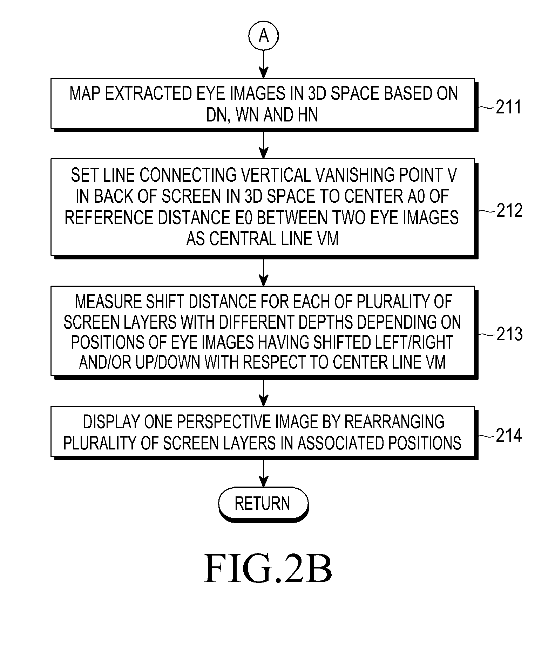

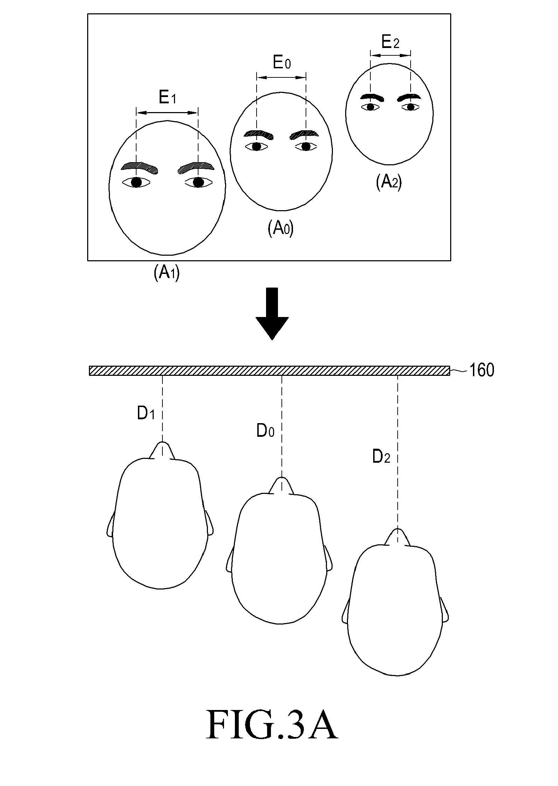

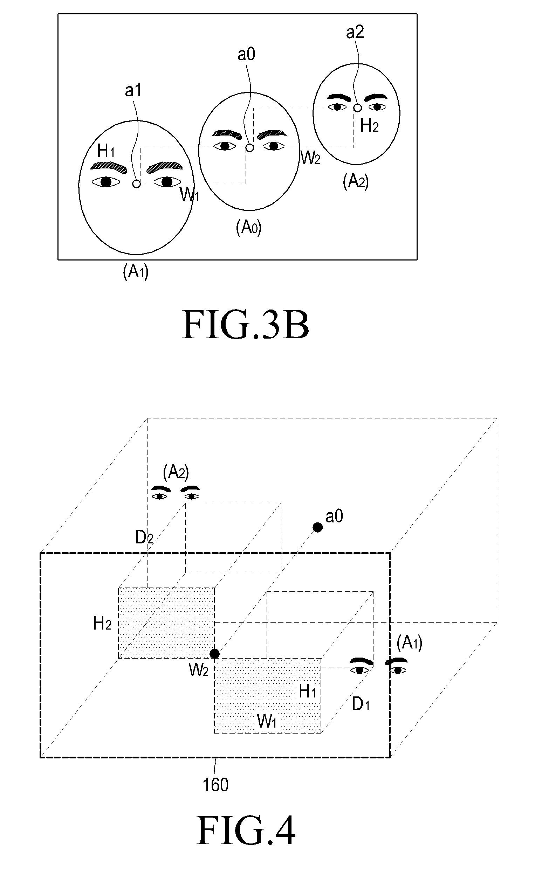

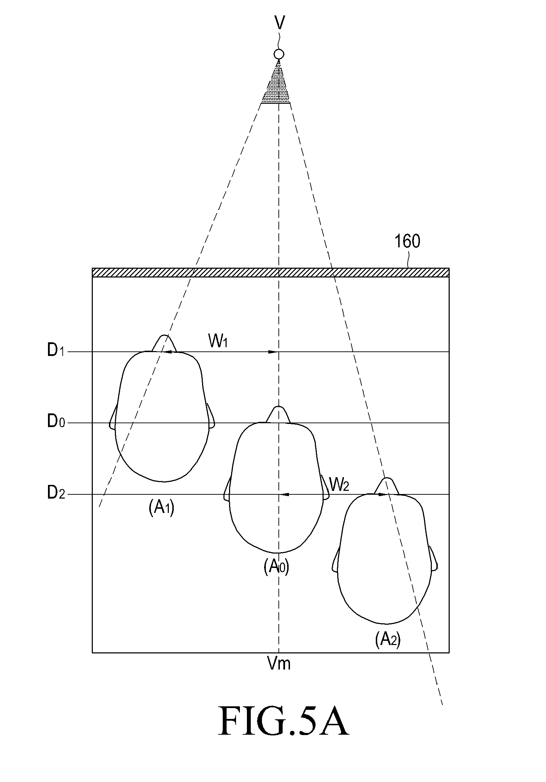

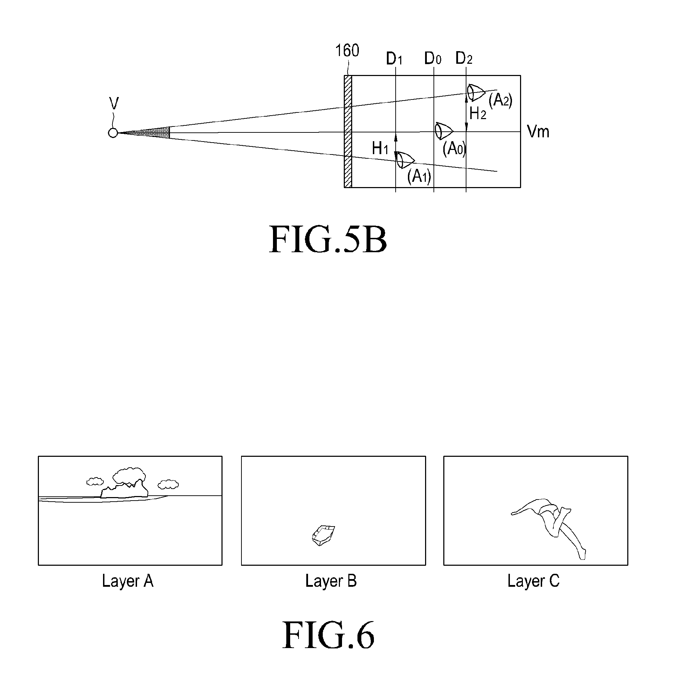

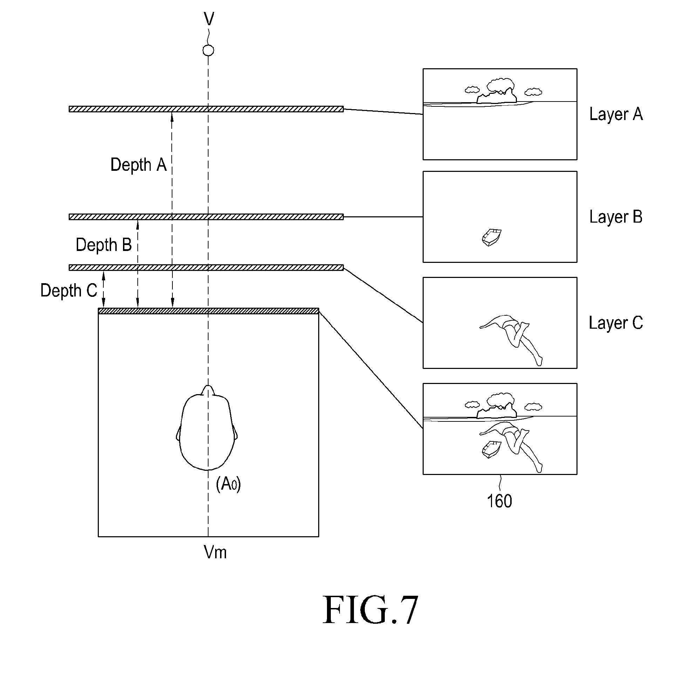

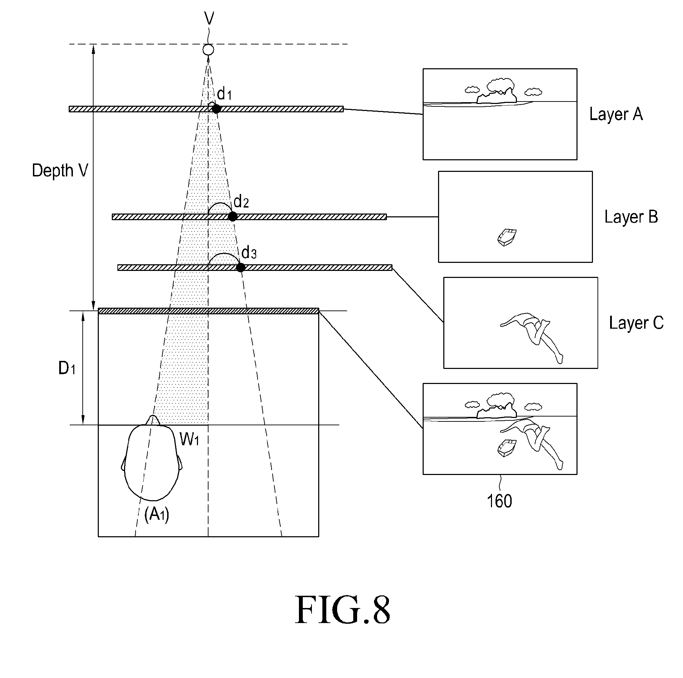

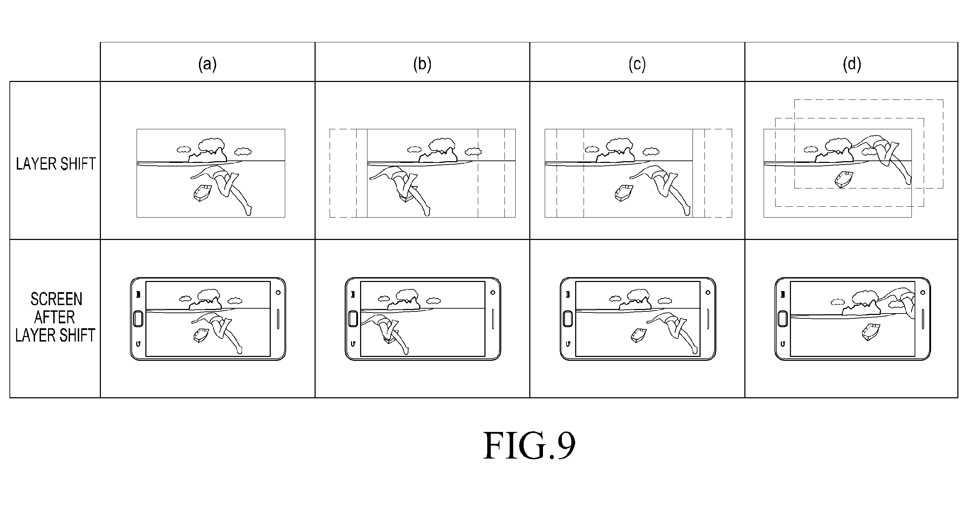

FIGs. 2A and 2B show a process of providing images in a terminal according to an exemplary embodiment of the present invention. FIGs. 3A and 3B show components for mapping eye images in a 3-Dimensional (3D) space in a process such as, for example, the process of FIGs. 2A and 2B. FIG. 4 shows a 3D space in which eye images are mapped in a process such as, for example, the process of FIGs. 2A and 2B according to an exemplary embodiment of the present invention. FIGs. 5A and 5B show positions of eye images which are shifted left/right and up/down in a 3D space such as, for example, the 3D space of FIG. 4 according to an exemplary embodiment of the present invention. FIG. 6 shows a plurality of screen layers in a process such as, for example, the process of FIGs. 2A and 2B according to an exemplary embodiment of the present invention. FIG. 7 shows an operation in which a plurality of screen layers constituting an image are rearranged in their associated reference positions in a process such as, for example, the process of FIGs. 2A and 2B according to an exemplary embodiment of the present invention. FIG. 8 shows an operation of displaying a perspective image by changing positions of a plurality of screen layers depending on a change in distance between a user's two eye images in a process such as, for example, the process of FIGs. 2A and 2B according to an exemplary embodiment of the present invention. FIG. 9 shows an image which is displayed on a terminal depending on shifts of a plurality of screen layers constituting the image, according to an exemplary embodiment of the present invention.

Exemplary embodiments of the present invention will be described in detail below with reference to FIGs. 2A to 9, together with FIG. 1.

Referring to FIGs. 2A and 2B, in step 201, the terminal determines whether a user's face is captured by a camera module 140. If a user's face is not captured by the camera module 140 in step 201, then the terminal proceeds to perform a related function. If a user's face image captured by the camera module 140 in the image providing mode in step 201, then the terminal proceeds to step 202 and the controller 110 provides the captured face image to the face image extractor 170. In step 202, the face image extractor 170 extracts two eye images from the captured face image and provides the extracted eye images to the controller 110. Thereafter, the terminal proceeds to step 203 in which the controller 110 measures a distance between the extracted two eye images and sets the initially measured distance between two eye images as a reference distance $E_0$ between two eye images.

In step 204, the controller 110 extracts a distance Do between a user and a screen of a display 160, which corresponds to the reference distance $E_0$ between two eye images, from the memory 130.

Generally, the user starts viewing images at a proper distance at which the user is able to watch the screen of the display 160. According to exemplary embodiments of the present invention, in the image providing mode, the controller 110 may set a distance between positions (e.g., a distance between two eye images extracted through image capturing) of two initial eye images captured by the camera module 140, as a reference distance $E_0$ between two eye images. After setting the reference distance $E_0$ between two eye images through the initial image capturing, the controller 110 may extract its associated predetermined distance Do from the memory 130, estimating that the user is at a proper distance at which the user is able to watch the screen of the display 160. In the image providing mode, the controller 110 may provide a predetermined reference distance $E_0$ between two eye images and its associated distance Do between a screen and a user, and the center of the reference distance $E_0$ between two eye images corresponds to the center of the screen of the display 160.

After extracting the reference distance $E_0$ between two eye images, the terminal proceeds to step 205 in which the controller 110 determines whether a user's face image is captured by the camera module 140.

After extracting the reference distance $E_0$ between two eye images, if a user's face image is not captured by the camera module 140 in step 205, then the controller 110 displays in step 209 an image on the screen of the display 160 by rearranging a plurality of screen layers, depths of which are differently set in order in advance, in their associated reference positions.

The image displayed in step 209 may be a displayable reference image when the distance Do between a screen and a user corresponds to the reference distance $E_0$ between two eye images.

If a user's face image is captured by the camera module 140 in step 205, then the controller 110 provides the captured face image to the face image extractor 170 and the terminal proceeds to step 206. In step 206, the face image extractor 170 extracts two eye images from the captured face image and provides the extracted eye images to the controller 110 and the terminal proceeds to step 207. In step 207, the controller 110 calculates and measures a distance $E_n$ between the extracted two eye images.

In step 208, the controller 110 compares the distance $E_n$ between the extracted two eye images, which is measured in step 207, with the reference distance $E_0$ between two eye images, which is set in step 203, to determine whether the distances are equal to each other. If the distances are equal to each other, then the controller 110 proceeds to step 209.

However, if the distances are determined to not equal to each other in step 208, then the terminal proceeds to step 210 in which the controller 110 extracts components for mapping the two eye images, the distance $E_n$ between

which is measured in step 207, in the 3D space, based on the distance $E_n$ between the extracted two eye images, which is measured in step 207, and the reference distance $E_0$ between two eye images, which is set in step 203.

In step 210, as the components for mapping the two eye images in the 3D space, the controller 110 extracts a distance $D_n$ between a screen and a user, which corresponds to the measured distance $E_n$ between two eye images, and extracts a left/right shift distance $W_n$ and/or an up/down shift distance $H_n$ from the center $a_0$ of the reference distance $E_0$ between two eye images to the center $a_n$ of the measured distance $E_n$ between two eye images.

To extract a distance $D_n$ between a screen and a user, which corresponds to the measured distance $E_n$ between two eye images, the controller 110 may calculate a difference between the measured distance $E_n$ between two eye images and the reference distance $E_0$ between two eye images, and extract the distance $D_n$ between a screen and a user by applying the difference to the distance Do between a screen of the display 160 and a user. Otherwise, the controller 110 may calculate a difference between the measured distance $E_n$ between two eye images and the reference distance $E_0$ between two eye images, and extract a distance value corresponding to the difference from the memory 130, as the distance $D_n$ between a screen and a user.

The above processes will be described with reference to FIGS. 3A and 3B. FIG. 3A shows distances from a screen to a user, which are based on distances between a user's two eye images.

Referring to FIG. 3A, a distance between two eye images extracted from a face image captured at a user's face position $A_0$ is set as a reference distance $E_0$ between two eye images, and a distance Do between a screen of the display 160 and a user, which corresponds to the reference distance $E_0$ between two eye images, is extracted from the memory 130.

After the reference distance $E_0$ between two eye images is set, a distance $E_1$ between two eye images extracted from a face image captured at a user's face position A1 having shifted left and down from the user's face position $A_0$ is measured, and a distance $D_1$ between a screen of the display 160 and a user, which corresponds to the distance $E_1$ between two eye images, is measured. It can be understood that the user's face position $A_1$ is closer to the screen than the user's face position $A_0$, because the distance $D_1$ between a screen of the display 160 and a user is shorter than the distance Do between a screen of the display 160 and a user.

Otherwise, after the reference distance $E_0$ between two eye images is set, a distance E2 between two eye images extracted from a face image captured at a user's face position $A_2$ having shifted right and up from the user's face position $A_0$ is measured, and a distance $D_2$ between a screen of the display 160 and a user, which corresponds to the distance E2 between two eye images, is measured. It can be understood that the user's face position $A_2$ is farther away from the screen than the user's face position $A_0$, because the distance $D_2$ between a screen of the display 160 and a user is longer than the distance Do between a screen of the display 160 and a user.

Referring to FIG. 3B, a left shift distance $W_1$ and a down shift distance $H_1$ from the center $a_0$ of the reference distance $E_0$ between two eye images, which is set at the user's face position $A_0$, to the center a1 of the distance $E_1$ between two eye images, which is measured at the user's face position $A_1$, are measured. In addition, a right shift distance $W_2$ and an up shift distance $H_2$ from the center $a_0$ of the reference distance $E_0$ between two eye images, which is set at the user's face position $A_0$, to the center $a_2$ of the distance E2 between two eye images, which is measured at the user's face position $A_2$, are measured.

After extracting the components $D_n$, $W_n$, and $H_n$ for mapping the two eye images in the 3D space in step 210, the terminal proceeds to step 211 in which the controller 110 maps the two eye images, the distance $E_n$ between which is measured in step 207, in the 3D space based on the components $D_n$, $W_n$, and $H_n$. The terminal then proceeds to step 212.

In step 212, the controller 110 sets a virtual vanishing point V in a back of a screen in the 3D space where the eye images are mapped in step 211, and sets a line connecting the virtual vanishing point V to the center $a_0$ of the reference distance between two eye images, as a center line $V_m$.

Steps 211 and 212 will be described with reference to FIGs. 4, 5A and 5B. It is shown in FIG. 4 that two eye images in the user's face position $A_1$ are mapped in the 3D space based on the components $D_1$, $W_1$ and $H_1$ for mapping in the 3D space, which are extracted in connection with FIGs. 3A and 3B, and two eye images in the user's face position $A_2$ are mapped in the 3D space based on the components $D_2$, $W_2$ and $H_2$ for mapping in the 3D space, which are extracted in connection with FIGs. 3A and 3B.

FIG. 5A is a view seen from the top of the 3D space in which the user's two eye images are mapped depending on user's face positions $A_1$ and $A_2$ as in FIG. 4, showing eye images in the user's face positions $A_1$ and $A_2$ which have shifted left and right (along the x-axis) from the eye images in the user's face position $A_0$.

FIG. 5B is a view seen from the side of the 3D space in which a user's two eye images are mapped depending on user's face positions $A_1$ and $A_2$ as in FIG. 4, showing eye images in the user's face positions $A_1$ and $A_2$ which have shifted up and down (along the y-axis) from the eye images in the user's face position $A_0$.

In FIGs. 5A and 5B, a virtual vanishing point V is set in a back of the screen in the 3D space, a line connecting the virtual vanishing point V to the center $a_0$ of the reference distance $E_0$ between two eye images is set as a center line $V_m$, and user's eye images are shown, which are shifted left/right and/or up/down with respect to the center line $V_m$ depending on user's face positions $A_1$ and $A_2$. After setting the center line $V_m$ in step 212, the controller 110 measures, in step 213, a shift distance in accordance with Equation (1), for each of the plurality of screen layers, depths of which are differently set in order in advance, depending on positions of eye images which have shifted left/right and/or up/down with respect to the center line $V_m$.

After measuring the left/right shift distance and/or the up/down shift distance for each of the plurality of screen layers in accordance with Equation (1), the controller 110 displays, in step 214, an image including a plurality of screen layers in a perspective way depending on the user's gaze position, by rearranging the plurality of screen layers in their associated positions after shifting them by the measured shift distances.

Steps 213 and 214 will be described with reference to FIGs. 6 to 8. FIG. 6 shows a plurality of screen layers Layer A, Layer B, and Layer C constituting one image.

For the plurality of screen layers in FIG. 6, their depths are differently set in order as shown in FIG. 7. For example, in the z-axis direction, the Layer A is set in advance to have a depth A, the Layer B is set in advance to have a depth B, and the Layer C is set in advance to have a depth C.

FIG. 7 shows a reference image which may be displayed on a screen of the display 160 when the distance Do between a screen of the display 160 and a user corresponds to the reference distance $E_0$ between two eye images, as in step 209. While the reference image is displayed in the user's face position $A_0$ as shown in FIG. 7, if the user's face image shifts from the user's face position $A_0$ to the user's face position $A_1$ as it shifts to the left and down sides, a right shift distance and an up shift distance are measured for each of the plurality of screen layers Layer A, Layer B and Layer C in accordance with Equation (1).

In FIG. 8 showing the 3D space as seen from the top, the plurality of screen layers Layer A, Layer B and Layer C are shifted to the right by their associated right shift distances $d_1$ to $d_3$ measured in accordance with Equation (1). Although not shown, the plurality of screen layers Layer A, Layer B and Layer C are shifted to the up side by their associated up shift distances measured in accordance with Equation (1). As a result, one image including a plurality of rearranged screen layers may be displayed on the screen of the display 160, as shown in FIG. 8.

As shown in FIG. 8, when a user's face image shifts from the user's face position $A_0$ to the user's face position $A_1$, the plurality of screen layers shift in the opposite direction, making it possible to provide perspective images to the user depending on the user's gaze direction and distance.

FIG. 9 shows an image which is displayed on a screen of the display 160 depending on shifts of a plurality of screen layers constituting the image.

In FIG. 9, (a) shows a reference image displayed in the user's face position $A_0$ as in FIG. 7, and (b) shows an image that is displayed after its plurality of screen layers are shifted left when the user's face image shifts to the right in (a) of FIG. 9.

In FIG. 9, (c) shows an image that is displayed after its plurality of screen layers are shifted right when the user's face image shifts to the left in (a) of FIG. 9, and (d) shows an image that is displayed after its plurality of screen layers are shifted to the right and up sides when the user's face image shifts to the left and down sides in (a) of FIG. 9.

According to exemplary embodiments of the present invention, the apparatus and method for providing images in a terminal may be implemented in a non-transient computer-readable recording medium as computer-readable codes. The non-transient computer-readable recording medium may include any kind of recording devices in which data readable by a computer system is stored. Examples of the recording medium may include Read Only Memory (ROM), Random Access Memory (RAM), optical disk, magnetic tape, floppy disk, hard disk, non-volatile memory, etc., and may also include being implemented in the form of a carrier wave (e.g., transmission over the Internet). In the non-transient computer-readable recording medium, computer-readable codes may be stored and executed in a distributed manner in which they are distributed over computer systems connected to the network.

As is apparent from the foregoing description, according to exemplary embodiments of the present invention, the apparatus and method for providing images in a terminal may provide an image in which a far view has a less shift and a near view has a greater shift depending on the user's gaze position, making it possible to provide perspective images to users.

While the invention has been shown and described with reference to certain exemplary embodiments thereof, it will be understood by those skilled in the art that various changes in form and details may be made therein without departing from the spirit and scope of the invention as defined by the appended claims and their equivalents.

**Claims**

1. An apparatus for providing an image in a terminal, the apparatus comprising:

   a camera module for capturing a face image; and
   a controller for displaying an image by rearranging a plurality of screen layers constituting the image depending on a change in positions of two eye images extracted from the face image captured by the camera module.

2. The apparatus of claim 1, further comprising:

a face image extractor for extracting a face image from an object captured by the camera module, for extracting two eye images from the face image, and for providing the extracted images to the controller; and
a memory for storing an image including a plurality of screen layers, depths of which are differently set in order.

3. The apparatus of claim 1, wherein the controller measures a distance between two eye images extracted from the face image captured by the camera module, sets the measured distance between two eye images as a reference distance $E_0$ between two eye images, and extracts a distance Do between a screen and a user, which is set in advance for the reference distance $E_0$ between two eye images.

4. The apparatus of claim 3, wherein after setting the reference distance $E_0$ between two eye images, the controller measures a distance $E_n$ between two eye images in the face image captured by the camera module, compares the measured distance $E_n$ between two eye images with the reference distance $E_0$ between two eye images, and extracts components for mapping the two eye images, the distance $E_n$ between which is measured, in a 3-Dimensional (3D) space, if the measured distance $E_n$ is different from the reference distance $E_0$.

5. The apparatus of claim 4, wherein the components for mapping the two eye images in a 3D space includes a distance $D_n$ between a screen and a user, which corresponds to the measured distance $E_n$ between two eye images, and a left/right shift distance $W_n$ and an up/down shift distance $H_n$ from a center $a_0$ of the reference distance $E_0$ between two eye images to a center $a_n$ of the measured distance $E_n$ between two eye images.

6. The apparatus of claim 5, wherein the controller extracts the distance $D_n$ between a screen and a user, which corresponds to the measured distance $E_n$ between two eye images, depending on a difference between the measured distance $E_n$ between two eye images and the reference distance $E_0$ between two eye images.

7. The apparatus of claim 4, wherein the controller maps the two eye images, between which the distance $E_n$ is measured, in the 3D space based on the components for mapping the two eye images in a 3D space.

8. The apparatus of claim 7, wherein when the two eye images are mapped in the 3D space, the controller sets, as a center line $V_m$, a line connecting a virtual vanishing point V, which is set in a back of a screen in the 3D space, to a center $a_0$ of the reference distance $E_0$ between two eye images.

9. The apparatus of claim 8, wherein the controller measures a left/right shift distance and an up/down shift distance for each of the plurality of screen layers depending on positions of two eye images shifting with respect to the center line $V_m$, in accordance with the following equation:

$$Left/RightShiftDistanceForLayerN = \frac{(DepthV - DepthN)}{(DepthV - D_n)} * W_n$$

$$Up/DownShiftDistanceForLayerN = \frac{(DepthV - DepthN)}{(DepthV - D_n)} * H_n$$

where n > 1, Depth V corresponds to a predetermined distance between the virtual vanishing point V and a screen of a display, Depth N corresponds to a predetermined distance between an N-th screen layer among the plurality of screen layers and the screen of the display, $D_n$ corresponds to a distance between the screen of the display and the user, which corresponds to the measured distance $E_n$ between two eye images, $W_n$ corresponds to a left/right shift distance from the center $a_0$ of the reference distance $E_0$ between two eye images to the center $a_n$ of the measured distance $E_n$ between two eye images, and $H_n$ corresponds to an up/down shift distance from the center $a_0$ of the reference distance $E_0$ between two eye images to the center $a_n$ of the measured distance $E_n$ between two eye images.

10. The apparatus of claim 9, wherein the controller displays an image by rearranging the plurality of screen layers, the left/right shift distance and the up/down shift distance of which are measured, in associated positions depending on positions of two eye images shifting with respect to the center line $V_m$.

11. A method for providing an image in a terminal, the method comprising:

extracting two eye images from a face image captured by a camera module; and
displaying an image by rearranging a plurality of screen layers constituting the image depending on a change in positions of the extracted two eye images.

12. The method of claim 11, wherein the displaying of the image comprises:

extracting a reference distance $E_0$ between two eye images;
extracting a distance Do between a screen and a user, which is set in advance for the reference distance $E_0$ between two eye images;
comparing the reference distance $E_0$ between two eye images with a distance $E_n$ between two eye images, which is measured in the face image captured by the camera module;
extracting components for mapping the two eye images, the distance $E_n$ between which is measured, in a 3-Dimensional (3D) space, if the measured distance $E_n$ is different from the reference distance $E_0$;
mapping the two eye images, between which the distance $E_n$ is measured, in the 3D space based on the components for mapping the two eye images in the 3D space;
measuring a shift distance for each of the plurality of screen layers depending on positions of the two eye images mapped in the 3D space; and
displaying the image by rearranging the plurality of screen layers, shift distances of which are measured, in associated positions.

13. The method of claim 12, wherein the extracting of the distance Do comprises:

measuring a distance between two eye images extracted from the face image captured by the camera module;
setting the measured distance between two eye images as the reference distance $E_0$ between two eye images; and
extracting the distance Do between the screen and the user, which is set in advance for the reference distance $E_0$ between two eye images.

14. The method of claim 12, wherein the extracting of the components for mapping the two eye images comprises:

extracting a distance $D_n$ between the screen and the user, which corresponds to the measured distance $E_n$ between two eye images; and
extracting a left/right shift distance $W_n$ and an up/down shift distance $H_n$ from a center $a_0$ of the reference distance $E_0$ between two eye images to a center $a_n$ of the measured distance $E_n$ between two eye images.

15. The method of claim 14, wherein the extracting of the distance $D_n$ comprises extracting the distance $D_n$ between the screen and the user, which corresponds to the measured distance $E_n$ between two eye images, depending on a difference between the measured distance $E_n$ between two eye images and the reference distance $E_0$ between two eye images.

16. The method of claim 12, wherein the measuring of the shift distance for each of the plurality of screen layers comprises:

setting a virtual vanishing point V in a back of the screen in the 3D space, when the two eye images are mapped in the 3D space;
setting, as a center line $V_m$, a line connecting the virtual vanishing point V to a center $a_0$ of the reference distance $E_0$ between two eye images; and
measuring a left/right shift distance and an up/down shift distance for each of the plurality of screen layers depending on positions of two eye images shifting with respect to the center line $V_m$.

17. The method of claim 16, wherein the measuring of the left/right shift distance and the an up/down shift distance for each of the plurality of screen layers is achieved in accordance with the following equation;

$$Left/RightShiftDistanceForLayerN = \frac{(DepthV - DepthN)}{(DepthV - D_n)} * W_n$$

$$Up/DownShiftDistanceForLayerN = \frac{(DepthV - DepthN)}{(DepthV - D_n)} * H_n$$

where n > 1, Depth V corresponds to a predetermined distance between the virtual vanishing point V and a screen of a display, Depth N corresponds to a predetermined distance between an N-th screen layer among the plurality of screen layers and the screen of the display, $D_n$ corresponds to a distance between the screen of the display and the user, which corresponds to the measured distance $E_n$ between two eye images, $W_n$ corresponds to a left/right shift distance from the center $a_0$ of the reference distance $E_0$ between two eye images to the center $a_n$ of the measured distance $E_n$ between two eye images, and $H_n$ corresponds to an up/down shift distance from the center $a_0$ of the reference distance $E_0$ between two eye images to the center $a_n$ of the measured distance $E_n$ between two eye images.

18. The method of claim 12, wherein the displaying of the image comprises displaying the image by rearranging the plurality of screen layers, the left/right shift distance and the up/down shift distance of which are measured, in associated positions.

19. The method of claim 11, wherein depths of the plurality of screen layers constituting the image are differently set in order in advance.

140        150        160

CAMERA MODULE

SYNC SIGNAL

DATA

IMAGE PROCESSOR

DISPLAY

123        120

RF UNIT

DATA PROCESSOR

130

MEMORY

110   CONTROLLER

170

FACE IMAGE EXTRACTOR

125   AUDIO PROCESSOR

KEY INPUT UNIT  —127

FIG.1

START

201

FACE IMAGE CAPTURED BY
CAMERA MODULE? — NO → PERFORM RELATED
FUNCTION

YES

EXTRACT TWO EYE IMAGES FROM
CAPTURED FACE IMAGE — 202

MEASURE DISTANCE BETWEEN TWO EYE
IMAGES AND SET IT AS REFERENCE
DISTANCE E0 BETWEEN TWO EYE IMAGES — 203

EXTRACT DISTANCE D0 BETWEEN SCREEN
AND USER, WHICH CORRESPOND TO
REFERENCE DISTANCE E0 BETWEEN
TWO EYE IMAGES — 204

205

FACE IMAGE CAPTURED BY
CAMERA MODULE? — NO

YES

EXTRACT TWO EYE IMAGES FROM
CAPTURED FACE IMAGE — 206

MEASURE DISTANCE EN BETWEEN
TWO EYE IMAGES — 207

208

EN=E0? — YES

NO

DISPLAY ONE IMAGE BY REARRANGING
PLURALITY OF SCREEN LAYERS WITH
DIFFERENT DEPTHS IN ASSOCIATED
REFERENCE POSITIONS — 209

EXTRACT COMPONENTS DN, WN AND
HN FOR MAPPING IN 3D SPACE BASED ON
REFERENCE DISTANCE E0 BETWEEN
TWO EYE IMAGES AND MEASURED DISTANCE
EN BETWEEN TWO EYE IMAGES — 210

A

# FIG.2A

A

MAP EXTRACTED EYE IMAGES IN 3D SPACE BASED ON
DN, WN AND HN                                                    ~211

SET LINE CONNECTING VERTICAL VANISHING POINT V
IN BACK OF SCREEN IN 3D SPACE TO CENTER A0 OF
REFERENCE DISTANCE E0 BETWEEN TWO EYE IMAGES        ~212
AS CENTRAL LINE VM

MEASURE SHIFT DISTANCE FOR EACH OF PLURALITY OF
SCREEN LAYERS WITH DIFFERENT DEPTHS DEPENDING ON
POSITIONS OF EYE IMAGES HAVING SHIFTED LEFT/RIGHT     ~213
AND/OR UP/DOWN WITH RESPECT TO CENTER LINE VM

DISPLAY ONE PERSPECTIVE IMAGE BY REARRANGING
PLURALITY OF SCREEN LAYERS IN ASSOCIATED POSITIONS    ~214

RETURN

# FIG.2B

FIG.3A

# FIG.3B

# FIG.4

FIG.5A

FIG.5B

Layer A          Layer B          Layer C

FIG.6

FIG.7

FIG.8

| | (a) | (b) | (c) | (d) |
|---|---|---|---|---|
| LAYER SHIFT | | | | |
| SCREEN AFTER LAYER SHIFT | | | | |

FIG.9